# EUROPÄISCHE PATENTSCHRIFT

(11) **EP 2 678 807 B1**
(45) Veröffentlichungstag und Bekanntmachung des Hinweises auf die Patenterteilung: **22.11.2017**
(21) Anmeldenummer: 12704372.7
(22) Anmeldetag: 15.02.2012
(51) Int. Cl.: G06K 19/077

(54) **INBETRIEBNAHME EINES PORTABLEN DATENTRÄGERS**
COMMISSIONING A PORTABLE DATA STORAGE MEDIUM
INITIALISATION D'UN SUPPORT DE DONNÉES PORTABLE

(30) Priorität: 21.02.2011 DE 102011011910
(43) Veröffentlichungstag der Anmeldung: 01.01.2014
(73) Patentinhaber: Giesecke+Devrient Mobile Security GmbH, 81677 München (DE)
(72) Erfinder: BALDISCHWEILER, Michael, 81825 München (DE); RANKL, Wolfgang, 81825 München (DE)
(86) Internationale Anmeldenummer: PCT/EP2012/000666
(87) Internationale Veröffentlichungsnummer: WO 2012/113522

(56) Entgegenhaltungen:
- EP-A1- 1 835 448
- EP-A2- 0 520 455
- DE-A1-102008 000 011
- US-A1- 2004 033 727
- US-B1- 6 371 378

## Beschreibung

Die vorliegende Erfindung betrifft ein Verfahren zum Inbetriebnehmen eines portablen Datenträgers, einen portablen Datenträger sowie ein Verfahren zum Herstellen eines derartigen Datenträgers.

Zur sicheren Datenübermittlung werden häufig portable Datenträger mit nicht-flüchtigen Speichern verwendet, z.B. USB-Token, Flash-Speicherelemente oder dergleichen, die über eine möglichst standardisierte Schnittstelle mit einem Endgerät verbunden werden können, damit dieses Nutzdaten aus dem Speicher auslesen kann. Diese Art der Datenübermittlung wird auch von Institutionen und Firmen verwendet, z.B. von Herstellern oder Herausgebern von telekommunikations- und/oder informationstechnischen Produkten, wie z.B. elektronischen, gegebenenfalls portablen Endgeräten oder Software, um Nutzern oder Kunden direkt oder indirekt über einen beauftragten Datenträgerherausgeber wichtige Nutzdaten zur Verfügung zu stellen, wie z.B. Aktualisierungsdaten für Produkte, Firmware- oder Software-Updates, Zugangsdaten oder dergleichen.

Hierbei ist wesentlich, dass ein Nutzer von der datentechnischen Unversehrtheit und Integrität der auf diese Weise erhaltenen Nutzdaten ausgehen kann, z.B. indem er möglichst zweifelsfrei feststellen kann, dass der Datenträger nicht auf seinem, z.B. postalischen Weg von dem Datenträgerherausgeber zu dem Nutzer manipuliert wurde, z.B. indem er mit Schadcode oder manipulierten Nutzdaten ausgestattet wurde. In diesem Zusammenhang besteht das Problem, dass ein Nutzer anhand des erhaltenen Datenträgers zunächst nicht sicher verifizieren kann, ob dieser noch in dem vom Datenträgerherausgeber beabsichtigten, unbenutzten und unmanipulierten Auslieferungs- bzw. Vorinbetriebnahmezustand vorliegt. Der Nutzer kann insofern nicht zwischen einem bereits in Betrieb genommen, unsicheren Datenträger und einem noch nicht in Betrieb genommenen, sicheren Datenträger unterscheiden.

Unter der "Inbetriebnahme" des Datenträgers ist hierbei dessen erstmalige bestimmungsgemäße Verwendung nach der Herstellung und der gewünschten datentechnischen Ausgestaltung zu verstehen, wobei auch notwendige und Vorbereitungsmaßnahmen unter den Begriff der "Inbetriebnahme" fallen, die seine unmittelbare erstmalige Verwendung ermöglichen, wie z.B. die Entfernung eines optischen Sicherheitssigels oder dergleichen.

Neben der an sich bekannten Verwendung eines optischen Sicherheitssigels zum Nachweis eines Vorinbetriebnahmezustands des Datenträgers schlägt die EP 1183 895 B1 vor, dass die Inbetriebnahme eines Datenträgers eine Inbetriebnahmebestätigung des Nutzers erfordert, die in dem Datenträger gespeichert wird und über eine kontaktbehaftete Schnittstelle des Datenträgres prüfbar ist. Die EP 1068 590 B1 schlägt demgegenüber vor, bei der Inbetriebnahme eine Antennenschnittstelle des Datenträgers durch Trennen einer Verbindungsbrücke irreversibel zu aktivieren.

EP 1835 448 A1 zeigt einen Transponder mit mehreren abtrennbaren Abschnitten, die jeweils einen eigenen Schaltkreis und eine eigene Antenne umfassen. US 2004 0033727 A1 betrifft eine Chipkarte mit USB-Schnittstelle, welche aus dem Kartenkörper heraus bewegbar angeordnet ist.

In DE 102008000011 A1, das den Oberbegriff der unabhängigen Ansprüche bildet, wird auf einem Datenträger mit zwei Schnittstellen eine Anzeige vorgesehen, um den Vorinbetriebnahmezustand des Datenträgers einem Benutzer anzuzeigen.

Es ist demnach die Aufgabe der vorliegenden Erfindung, einen portablen Datenträger vorzuschlagen, bei dem ein Nutzer auf einfache und sichere Weise prüfen kann, ob eine Inbetriebnahme bereits stattgefunden hat.

Diese Aufgabe wird durch Verfahren und Vorrichtungen mit den Merkmalen der unabhängigen Ansprüche gelöst. In davon abhängigen Ansprüchen sind vorteilhafte Ausgestaltungen und Weiterbildungen der Erfindung angegeben.

Ein herkömmlicher portabler Datenträger umfasst in der Regel einen nicht-flüchtigen Speicher, einen Speichercontroller und eine Speicherschnittstelle, über die ein Endgerät auf Nutzdaten in dem Speicher des Datenträgers zugreifen kann. Erfindungsgemäß kann ein Nutzer eines solchen Datenträgers prüfen, ob der Datenträger noch in dem Vorinbetriebnahmenzustand vorliegt und die Nutzdaten insofern unmanipuliert und vertrauenswürdig sind, oder ob bereits eine Inbetriebnahme des Datenträgers erfolgt ist und dieser als unsicher einzustufen ist. Die Tatsache, dass sich der Datenträger noch oder nicht mehr in dem Vorinbetriebnahmenzustand befindet, wird hierbei in dem Datenträger intern möglichst irreversibel manifestiert.

Zu diesem Zweck richtet der Nutzer über eine von der Speicherschnittstelle verschiedene Sicherheitsschnittstelle eine Anfrage an eine mit der Sicherheitsschnittstelle verbundene, von dem Speichercontroller unterschiedliche Sicherheitseinheit des Datenträgers. Die Sicherheitseinheit und die Sicherheitsschnittstelle sind hierbei derart in dem Datenträger angeordnet und verfahrensmäßig aufeinander abgestimmt eingerichtet, dass sich eine erfolgte Inbetriebnahme in dem Datenträger intern möglichst irreversibel manifestiert und mittels der Anfrage an die Sicherheitseinheit zuverlässig festgestellt werden kann. Aus einer Reaktion der Sicherheitseinheit auf die Anfrage kann der Nutzer zweifelsfrei ableiten, ob der Datenträger noch in dem Vorinbetriebnahmenzustand vorliegt oder nicht.

Der Vorteil dieses softwaretechnisch realisierten Inbetriebnahme-Siegels besteht darin, dass eine Prüfung auf einen Vorinbetriebnahmenzustand des Datenträgers bereits durchgeführt werden kann, bevor der Datenträger über die Speicherschnittstelle mit einem Endgerät verbunden wird. Auf diese Weise können Schädigungen des Endgeräts über die Speicherschnittstelle durch manipulierte Nutzdaten vermieden werden, da der Datenträger zur Prüfung des Vorinbetriebnahmenzustands nicht über die Speicherschnittstelle mit einem Endgerät verbunden werden muss.

Über die Sicherheitsschnittstelle kann vorzugsweise nur die Sicherheitseinheit angesprochen werden, nicht jedoch der nicht-flüchtige Speicher oder der Speichercontroller. Aus diesem Grund besteht keinerlei Risiko einer Schädigung der Nutzdaten oder des Einbringens von Schadcode in den Speicher über die Sicherheitsschnittstelle. Die Ausgestaltung des Datenträgers mit einer ersten (Speicher-) Schnittstellen/ Controller-Anordnung ausschließlich zum Zugriff auf die Nutzdaten in dem Speicher und einer von der ersten Anordnung physikalisch und/ oder datentechnisch hinreichend separaten zweiten (Sicherheits-) Schnittstellen/Controller-Anordnung ermöglicht eine weitgehend risikolose und autonome Prüfung einer erfolgten Inbetriebnahme des Datenträgers. Vorzugsweise ist die Speicherschnittstelle eine kontaktbehaftete Schnittstelle und die Sicherheitsschnittstelle eine kontaktlose, z.B. Antennenschnittstelle.

Abhängig davon, ob die Anfrage an die Sicherheitseinheit vor oder nach einer Inbetriebnahme des Datenträgers erfolgt, führt sie zu unterschiedlichen Ergebnissen. Der Grund hierfür ist, dass eine Inbetriebnahme in dem Datenträger vorzugsweise derart registriert bzw. manifestiert wird, dass eine vor der Inbetriebnahme abfragbare, den Vorinbetriebnahmezustand anzeigende Nachricht nach der Inbetriebnahme nicht mehr abfragbar ist. Vorzugsweise wird die vorgegebene Nachricht von der Sicherheitseinheit nur vor der Inbetriebnahme als Reaktion auf die Anfrage ausgegeben, während die vorgegebene Nachricht nach der Inbetriebnahme des Datenträgers nicht mehr ausgegeben wird bzw. ausgegeben werden kann.

Vorzugsweise gibt die Sicherheitseinheit in Reaktion auf eine Anfrage nach der Inbetriebnahme gar keine Nachricht mehr aus. Dies hat den Vorteil, dass der Nutzer nicht zwischen verschiedenen Nachrichten unterscheiden muss, sondern davon ausgehen kann, dass der Datenträger nur dann unbenutzt und sicher ist, wenn er über die Sicherheitsschnittstelle (irgend-) eine Nachricht erhält. Dies kann beispielsweise dadurch erreicht werden, dass bei der Inbetriebnahme des Datenträgers, z.B. bei einer notwendigen Vorbereitungshandlung durch den Nutzer, eine elektrische Verbindung zwischen der Sicherheitseinheit und der Sicherheitsschnittstelle getrennt wird, so dass eine Anfrage über die Sicherheitsschnittstelle nach Inbetriebnahme gar nicht an die Sicherheitseinheit weitergeleitet wird. Nach Inbetriebnahmen ist dann keine Datenkommunikation mehr über die Sicherheitsschnittstelle möglich.

Dieses mechanisch realisierte Inbetriebnahme-Siegel, das auf einem mechanischen oder physikalischen Trennen einer elektrischen Verbindung zwischen der Sicherheitsschnittstelle und der Sicherheitseinheit bei Inbetriebnahme beruht, hat den Vorteil, dass es irreversibel ist und die elektrische Verbindung nicht mehr wiederhergestellt werden kann.

Ist die elektrische Verbindung der Sicherheitsschnittstelle mit der Sicherheitseinheit bei einem in Betrieb genommenen Datenträger getrennt worden, so kann sie nicht mehr wiederhergestellt werden. Der Nutzer kann bei Erhalt der vorgegebenen Nachricht auf Anfrage über die Sicherheitsschnittstelle sicher sein, dass der Datenträger tatsächlich in dem Vorinbetriebnahmezustand vorliegt, in dem er von dem Datenträgerhersteller oder -herausgeber ausgegeben wurde.

Die geeignete Kombination eines softwaretechnischen Inbetriebnahme-Siegels durch die auf Anfrage über die Sicherheitsschnittstelle vor der Inbetriebnahme mit einer vorgegebenen Nachricht antwortende Sicherheitseinheit und eines mechanischen Inbetriebnahme-Siegels durch irreversible Trennung einer elektrischen Verbindung in dem Datenträger nach der Inbetriebnahme verhindert insbesondere, dass ein Datenträger oder dessen Nutzdaten auf seinem Weg von dem Datenträgerhersteller oder -herausgeber zu dem Nutzer manipuliert wird, ohne dass dies für den Nutzer erkennbar wäre. Das entsprechende Risiko des Nutzers wird dadurch auf ein Minimum reduziert.

Vorzugsweise wird der Datenträgerkörper des Datenträgers aus einem Speicherabschnitt und einem Körperabschnitt gebildet, wobei der Speicherabschnitt zumindest die Speicherschnittstelle und der Körperabschnitt zumindest die Sicherheitsschnittstelle umfasst. Im Vorinbetriebnahmezustand des Datenträgers sind der Speicherabschnitt und der Körperabschnitt dann vorzugsweise derart miteinander verbunden und relativ zueinander angeordnet, dass die Speicherschnittstelle nicht nutzbar ist, d.h. eine Verbindung mit einem Endgerät über die Speicherschnittstelle bauartbedingt nicht möglich ist. Die Inbetriebnahme des Datenträgers besteht dann vorzugsweise darin, die Speicherschnittstelle derart freizulegen, dass ein Verbinden mit einem Endgerät jedenfalls mechanisch möglich ist.

Der Speicherabschnitt ist in dem Vorinbetriebnahmezustand derart schwenkbar, klappbar oder anderweitig geeignet relativ bewegbar in dem Körperabschnitt gelagert, dass er durch Herausschwenken oder Herausklappen aus dem Körperabschnitt für eine Verbindung mit einem Endgerät freigelegt werden kann.

Hierbei verläuft die elektrische Verbindung zwischen der Sicherheitsschnittstelle und der Sicherheitseinheit derart in dem Datenträger, dass das Herausschwenken bzw. -klappen des Speicherabschnitts aus dem Körperabschnitt zum Zwecke der Inbetriebnahme im Wesentlichen gleichzeitig die irreversible Trennung der elektrischen Verbindung bewirkt. Beispielsweise kann die elektrische Verbindung über einen Übergangsbereich zwischen dem Speicherabschnitt und dem Körperabschnitt verlegt werden, so dass sie abreißt, sobald der Speicherabschnitt aus dem Körperabschnitt herausgeschwenkt oder -geklappt wird.

Durch den besonders bevorzugten Ausbau des Datenträgerkörpers derart, dass eine Inbetriebnahme des Datenträgers ein vorheriges Freilegen der Speicherschnittstelle erfordert, was unweigerlich und notwendigerweise das Trennen der elektrischen Verbindung zwischen der Sicherheitsschnittstelle und der Sicherheitseinheit zu Folge hat, wird sichergestellt, dass ein Zugriff auf den Speicher des Datenträgers durch ein Endgerät sofort zur Trennung der elektrischen Verbindung und zur Beendigung des Vorinbetriebnahmezustands führt. Jedweder Zugriff eines Endgeräts auf den Speicher ist somit unmittelbar durch eine aufgrund der Trennung der elektrischen Verbindung unbeantwortet bleibende Anfrage über die Sicherheitsschnittstelle erkennbar. Bei der Herstellung des erfindungsgemäßen portablen Datenträgers werden der Speicherabschnitt und der Körperabschnitt derart hergestellt und relativ zueinander beweglich angeordnet, dass der Speicherabschnitt beim Freilegen der Speicherschnittstelle derart relativ zu dem Körperabschnitt bewegt werden muss, dass die elektrische Verbindung zwischen der Sicherheitseinheit und der Sicherheitsschnittstelle getrennt wird oder reißt.

Ein erneutes elektrisches Verbinden der Sicherheitseinheit und der Sicherheitsschnittstelle ist dann nicht mehr möglich. Hierzu wird die elektrische Verbindung derart über den Übergangsbereich von dem Körperabschnitt zu dem Speicherabschnitt (oder umgekehrt) verlaufend angeordnet, dass eine Trennung oder ein Abriss im Bereich des Übergangsbereichs nicht durch einfaches Zurückschwenken oder -klappen wiederhergestellt werden kann. Zum Beispiel können die beim Trennen oder Abreißen entstehenden Kontaktflächen irreversibel beschädigt, verformt oder anderweitig unbrauchbar gemacht werden, so dass eine erneute Kontaktierung nicht möglich ist.

Obwohl nahezu beliebige Bauformen eines solchen portablen Datenträgers denkbar sind, die die oben genannten Kriterien an die Inbetriebnahme eines portablen Datenträgers erfüllen, wird ein erfindungsgemäßer Datenträger aus praktischen Gründen vorzugsweise als kartenförmiger Datenträger hergestellt, z.B. in Form einer mit einer kontaktbehafteten USB-Speicherschnittstelle ausgestatteten Speicherkarte im ID1-Chipkartenformat. Der Speicherabschnitt wird hierbei vorzugsweise als USB-Speichertoken in Chipkartendicke hergestellt und in eine entsprechende Ausnehmung des chipkartenförmigen Körperabschnitts herausschwenkbar oder -klappbar eingebracht. In dem Körperabschnitt ist die Sicherheitsschnittstelle dann als Antennenschnittstelle realisiert.

Im Übergangsbereich vom Speicherabschnitt zum Körperabschnitt kann die elektrische Verbindung zwischen der Sicherheitsschnittstelle und der Sicherheitseinheit z.B. mit solchen Leitpasten, leitfähigen Klebern oder dergleichen realisiert werden, die bei erneuter Kontaktierung keine elektrische Leitfähigkeit mehr ausbilden. Auch kann die elektrische Verbindung in dem Übergangsbereich als irreversibler Abriss ausgestaltet werden, z.B. indem die im Übergangsbereich gerissenen Enden der elektrischen Verbindung durch geeignete mechanische Kräfte örtlich versetzt oder durch nichtleitendes Material überlagert werden.

Bei der Datenträgerherstellung kann die Sicherheitsschnittstelle auch als Antennenschicht in oder auf den den kartenförmigen Datenträgerkörper bildenden Kunststoffschichten ein- oder auflaminiert werden, so dass beim Herausklappen des Speicherabschnitts ein Teil der Antennenschicht irreversibel abreißt.

Die Sicherheitseinheit, die im Vorinbetriebnahmezustand auf Anfrage über die Sicherheitsschnittstelle die vorgegebene Nachricht ausgibt, kann sowohl in dem Speicherabschnitt als auch in dem Körperabschnitt des Datenträgers angeordnet sein und repräsentiert vorzugsweise ein datentechnisch, z.B. kryptographisch, und/ oder mechanisch besonders gegen Datenmanipulationen abgesichertes elektronisches Sicherheitselement oder -modul bzw. einen Sicherheitschip oder -controller, welcher vorzugsweise ausschließlich über die Sicherheitsschnittstelle ansprechbar ist. Eine Trennung der elektrischen Verbindung zu der Sicherheitsschnittstelle kann hierbei nicht durch eine Anfrage über die Speicherschnittstelle umgangen werden.

Falls die Sicherheitseinheit in dem Speicherabschnitt angeordnet ist, führt die elektrische Verbindung vorzugsweise über den Übergangsbereich zwischen Speicherabschnitt und Körperabschnitt zu der Sicherheitsschnittstelle. Falls die Sicherheitseinheit in dem Körperabschnitt angeordnet ist, führt die elektrische Verbindung vorzugsweise dennoch derart über den Übergangsbereich vom Körperabschnitt in den Speicherabschnitt und wieder zurück in den Körperabschnitt, dass auch in diesem Fall die elektrische Verbindung bei Inbetriebnahme des Datenträgers durch Freilegen der Speicherschnittstelle in dem Übergangsbereich irreversibel getrennt wird.

Der die Nutzdaten umfassende Speicher des Datenträgers kann prinzipiell ein beliebiger geeigneter nicht-flüchtiger Speicher sein, beispielsweise ein Flash-Speicher oder dergleichen. Vorzugsweise umfasst er wichtige Aktualisierungsdaten, z.B. Firmware- oder Software-Updates, für ein elektronisches oder Software-Produkt. Nach Inbetriebnahme des Datenträgers und Verbinden des Datenträgers mit einem Endgerät über die USB-Speicherschnittstelle greift das Endgerät auf den Flash-Speicher zu, liest die Aktualisierungsdaten aus und installiert diese bestimmungsgemäß.

Die von der USB-Speicherschnittstelle separate Sicherheitsschnittstelle ist vorzugsweise eine kontaktlos ansprechbare Schnittstelle, beispielsweise eine Antennenschnittstelle, die in dem Körperabschnitt des Datenträgers geeignet verlegt ist, um vor der Inbetriebnahme des Datenträgers eine kontaktlose Anfrage aufzunehmen und an die Sicherheitseinheit weiterzuleiten.

Der Speichercontroller des Datenträgers steuert Zugriffe eines Endgeräts über die Speicherschnittstelle auf den Speicher. Als weitere Sicherheitsmaßnahme zusätzlich zu der oben beschriebenen irreversibel feststellbaren Inbetriebnahme kann der Speichercontroller Speicherzugriffe nach Inbetriebnahme des Datenträgers vorzugsweise nur dann freigeben, wenn zuvor eine Zugriffsberechtigung bzw. Autorisierung von der Sicherheitsschnittstelle geprüft und deren Vorliegen festgestellt wurde.

Liegt eine solche Zugriffsberechtigung vor, kann die Sicherheitseinheit z.B. ein Berechtigungsflag anlegen, d.h. eine entsprechend belegte Variable, um dem Speichercontroller eine bestehende Zugriffsberechtigung zu signalisieren. Sofern in der Sicherheitseinheit oder an einer vorgegebenen Speicherstelle des nicht-flüchtigen Speichers das Berechtigungsflag nicht hinterlegt ist, wird von dem Speichercontroller keinerlei Zugriff auf den Speicher gewährt. Vor Festellen der Zugriffsberechtigung ist der Sicherheitscontroller vorzugsweise vollständig inaktiv und wird erst durch Setzen des Berechtigungsflags durch die Sicherheitseinheit aktiviert. Vorzugsweise wird das Flag irreversibel gesetzt, um einen einmal gewährten Zugriff auf den Speicher nicht durch nachträgliches Entfernen des Flags zu verschleiern.

Die eigentliche Überprüfung der Zugriffsberechtigung durch die Sicherheitseinheit findet vorzugsweise vor Inbetriebnahme des Datenträgers statt, da nach Inbetriebnahme mit der Sicherheitseinheit keine Datenkommunikationsverbindung mehr aufgebaut werden kann. Die Zugriffsberechtigung bzw. Autorisierung kann insbesondere durch eine einseitige oder wechselseitige Authentisierung geprüft werden. Beispielsweise kann ein Nutzer des Datenträgers sich gegenüber dem Datenträger oder gegenüber einem mit dem Datenträger verbundenen Hintergrundsystem authentisieren, z.B. durch Angabe eines geheimen Passworts, wie z.B. einer persönlichen Identifikationsnummer (PIN). Im Rahmen der Authentisierung kann der Datenträger dem Nutzer auch ein Einmalpasswort bereitstellen, mit dem er sich gegenüber einem Hintergrundsystem oder auch einem Endgerät als berechtigt anmelden kann.

Eine weitere Absicherung von Speicherzugriffen eines Endgeräts auf den nicht-flüchtigen Speicher des Datenträgers kann darin bestehen, dass der Speicherinhalt des nicht-flüchtigen Speichers in verschlüsselter Form vorliegt und erst entschlüsselt wird, wenn die Sicherheitseinheit eine Zugriffsberechtigung festgestellt hat. Damit kann verhindert werden, dass die Prüfung der Zugriffsberechtigung umgangen wird und auf den Speicher trotz eines nicht gesetzten Flags zugegriffen wird. Die Entschlüsselung wird vorzugsweise von der Sicherheitseinheit durchgeführt, und zwar vorzugsweise mit einem in der Sicherheitseinheit vorliegenden Entschlüsselungsschlüssel. Alternativ kann die Entschlüsselung auch durch den Speichercontroller unter Zugriff auf den Entschlüsselungsschlüssel in der Sicherheitseinheit vorgenommen werden.

Vorzugsweise wird die Entschlüsselung irreversibel durchgeführt, d.h. die einmal entschlüsselten Nutzdaten können nicht wieder derart verschlüsselt werden, dass sie erneut mit dem betreffenden Entschlüsselungsschlüssel entschlüsselt werden können. Sofern eine asymmetrische Verschlüsselung verwendet wird, ist der Verschlüsselungsschlüssel geheim und kann durch Unberechtigte nicht zum Verschlüsseln von manipulierten Nutzdaten verwendet werden. Entsprechende Vorkehrungen können auch in der Sicherheitseinheit getroffen werden. Dies hat den weiteren Sicherheitsvorteil, dass eine etwaige Manipulation der Nutzdaten nicht durch erneutes Verschlüsseln verschleiert werden kann.

Vorzugsweise ist in dem Datenträger, z.B. in dessen Kartenabschnitt, eine Anzeigeeinrichtung integriert, z.B. ein LCD-Display oder dergleichen. Eine erfolgte Inbetriebnahme des Datenträgers kann auf der Anzeigeeinrichtung entweder auf Anfrage oder, vorzugsweise, dauerhaft angezeigt werden. Die Ansteuerung der Anzeigeeinrichtung durch einen Anzeigecontroller ist hierbei vorzugsweise derart ausgestaltet, dass ein Anzeigentext, der eine erfolgte Inbetriebnahme wiedergibt - beispielsweise durch den Hinweis "in Betrieb gekommen", "benutzt", "used" oder dergleichen -, auf der Anzeigeeinrichtung angezeigt wird, sobald die elektrische Verbindung zwischen der Sicherheitseinheit und der Sicherheitsschnittstelle infolge der Inbetriebnahme getrennt wird. Der Anzeigecontroller steht mit dieser elektrischen Verbindung oder, vorzugsweise, mit einer speziellen Sensorleitung in Verbindung, die bei der Inbetriebnahme im Wesentlichen gleichzeitig mit der elektrischen Verbindung reißt. Die Sensorleitung führt vorzugsweise von dem Anzeigecontroller zumindest einmal über den Übergangsbereich zwischen dem Speicherabschnitt und dem Körperabschnitt und zurück zu dem Anzeigecontroller. Die Sensorleitung wird dann für den Anzeigecontroller erkennbar getrennt, sobald bei der Inbetriebnahme der Speicherabschnitt aus dem Körperabschnitt herausgeschwenkt wird.

Wie oben erläutert, erhält der Nutzer auf eine Anfrage an die Sicherheitseinheit nach Inbetriebnahme des Datenträgers keine Antwort mehr, da dessen elektrische Verbindung zu der Sicherheitsschnittstelle getrennt wurde. Zusätzlich dazu erhält der Nutzer über die Anzeigeeinrichtung einen optisch leicht erkennbaren, positiven Hinweis auf die erfolgte Inbetriebnahme, und muss sich nicht nur auf den negativen Hinweis verlassen, dass seine Anfrage an die Sicherheitseinheit unbeantwortet geblieben ist.

Auf der Anzeigeeinrichtung kann auf Veranlassung des Nutzers, beispielsweise über einen auf dem Datenträger angebrachten Aktivierungsknopf, auch ein von der Sicherheitseinheit erzeugtes Einmalpasswort ausgegeben werden, mit dem sich ein Nutzer gegenüber einem Hintergrundsystem oder einem Endgerät authentisieren kann.

Darüber kann als weitere Sicherheitsmaßnahme in den portablen Datenträger auch eine Zeitpuffereinrichtung integriert sein, die nach erfolgter Inbetriebnahme einen Zugriff eines Endgeräts über die Speicherschnittstelle auf den Speicher nur für eine vorgegebene Zeitdauer ermöglicht. Als Zeitpuffereinrichtung kann beispielsweise ein Kondensator eingesetzt werden, der über die als Antenne ausgebildete Sicherheitsschnittstelle für eine bestimmte vorgegebene Zeitdauer geladen werden kann, innerhalb der dann die Verbindung mit dem Endgerät über die Speicherschnittstelle zustande kommen muss.

Wenn der Nutzer nach der Inbetriebnahme des Datenträgers diesen nicht innerhalb der durch die Zeitpuffereinrichtung vorgegebenen Zeitdauer über die Speicherschnittstelle mit einem Endgerät verbindet, wird vorzugsweise jedweder Zugriff auf den Speicher durch den Speichercontroller gesperrt und der Datenträger wird unbrauchbar. Bei Ablauf des Zeitpuffers kann die Sicherheitseinheit beispielsweise das Berechtigungsflag wieder löschen und den Speichercontroller dadurch wieder in den inaktiven Zustand versetzen. Ein solches Entfernen eines zuvor gesetzten Berechtigungsflags ist dann jedoch irreversibel.

Vorzugsweise ist der Zugriff auf den Speicher des Datenträgers über den Speichercontroller, spätestens nach der Inbetriebnahme, unabhängig von dem Sicherheitscontroller möglich.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den beiliegenden Zeichnungen, die zeigen:
- Figur 1: einen schematischen Ablauf des erfindungsgemäßen Verfahrens;
- Figur 2: eine bevorzugte Ausführungsform des Datenträgers in Form einer USB-Chipkarte;
- Figur 3: eine schematische Übersicht eines erfindungsgemäßen Datenträgers; und
- Figuren 4 bis 6: weitere Ausgestaltungen des erfindungsgemäßen Datenträgers.

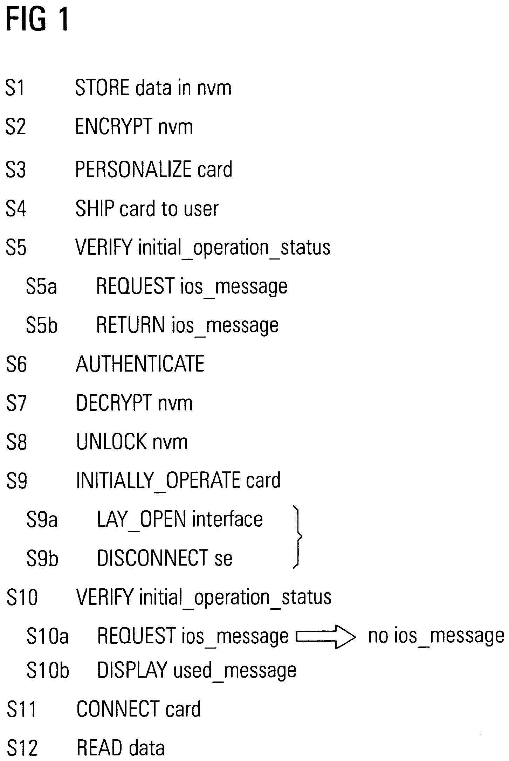

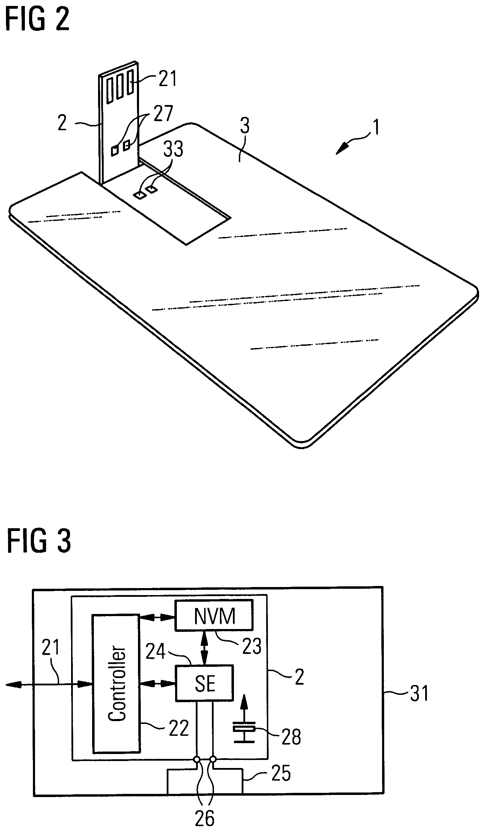

Fig. 1 zeigt die Schritte eines Verfahrens zur Inbetriebnahme eines portablen Datenträgers durch einen Nutzer, wie z.B. der in Figur 2 illustrierten USB-Chipkarte 1 mit USB-Speicherschnittstelle 21. Die USB-Chipkarte 1 ist dazu gedacht, dass der Nutzer diese nach Erhalt erstmalig in Betrieb nimmt, die USB-Karte 1 an eine USB-Schnittstelle eines Endgeräts anschließt und die auf der USB-Karte 1 gespeicherten, für den Nutzer bestimmten Nutzdaten in das Endgerät einspielt.

Die vorliegende Erfindung ist jedoch nicht auf USB-Schnittstellen beschränkt, gleichwohl sich diese jedoch aufgrund ihrer weiten Verbreitung und einfachen Handhabung besonders eignen. Insofern ist die vorliegende Erfindung prinzipiell auf beliebige portable Datenträger mit beliebigen Speicherschnittstellen anwendbar, z.B. auch auf sichere Speicherkarten, Multimediakarten, SIM-Mobilfunkkarten, SD-Karten oder dergleichen. Ebenso wenig ist die vorliegende Erfindung auf kartenförmige Datenträger, z.B. auf die in den Figuren gezeigten USB-Chipkarten im ID1-Kartenformat, beschränkt, sondern es können portable Datenträger beliebiger anderer Bauformen eingesetzt werden, z.B. auch herkömmliche USB-Token oder USB-Speicherelemente nahezu beliebiger Gestaltung.

Die mit einer USB-Schnittstelle 21 ausgestattete USB-Karte 1 kann beispielsweise dazu dienen, auf sichere Art und Weise wichtige bzw. sicherheitsrelevante Nutzdaten von einem Produkthersteller oder einer sonstigen Institution an einen Nutzer weiterzuleiten, z.B. wenn eine Weiterleitung über ein Datenkommunikationsnetz aus Sicherheitsgründen nicht in Frage kommt.

Derartige wichtige Nutzdaten können beispielsweise Aktualisierungsdaten sein, die in ein Endgerät des Nutzers eingespielt werden müssen, z.B. Firmware- oder Software-Updates, oder beliebige weitere Konfigurations-, Authentisierungs-, Berechtigungs-, geldwerte oder sonstige sicherheitsrelevanten Daten, die der Nutzer im Zusammenhang mit sicherheitskritischen Berechnungen, Operationen, Geräten oder Vorgängen benötigt. Um die Verwendung der auf der USB-Karte 1 abgelegten Nutzdaten auf einen oder mehrere bestimmte Nutzer oder ein oder mehrere Endgeräte abzustimmen oder einzuschränken, können die Nutzdaten entsprechend personalisiert oder individualisiert sein.

Die in Fig. 2 illustrierte USB-Chipkarte 1 umfasst einen als USB-Token ausgestalteten Speicherabschnitt 2 und einen als Chipkartenkörper ausgestalteten Körperabschnitt 3, die beweglich miteinander verbunden sind. Bei der Auslieferung der USB-Karte 1 an den Nutzer ist diese unbenutzt und liegt in einem Auslieferungs- bzw. Vorinbetriebnahmezustand vor. Der Nutzer kann den Vorinbetriebnahmezustand unter anderem daran erkennen, dass der in Fig. 2 in einem ausgeklappten Zustand gezeigte USB-Token 2 in einer hierfür vorgesehenen Ausnehmung des Körperabschnitts 3 liegt und herausbrechbar in dieser befestigt ist, so dass der USB-Token 2 und der Kartenkörper 3 eine Chipkarte im ID1-Format bilden. In dem Auslieferungs- bzw. Vorinbetriebnahmezustand kann die USB-Schnittstelle 21 nicht benutzt werden, da sie in der Ausnehmung verborgen ist und nicht ohne weiteres durch Herausschwenken freigelegt werden kann, da noch eine Materialverbindung zwischen dem USB-Token 2 und dem Kartenkörper 3 besteht, die bei der Inbetriebnahme getrennt bzw. zerstört werden muss. Die Inbetriebnahme der USB-Karte 1 besteht dann darin, dass der USB-Token 2 aus dem Kartenkörper 3 derart ausgeklappt oder ausgeschwenkt wird, dass die USB-Karte 1 über die USB-Schnittstelle 21 mit einem Endgerät verbunden werden kann. Dabei wird die Materialverbindung irreversibel getrennt.

Fig. 3 zeigt die einzelnen elektrischen und elektronischen Komponenten der USB-Karte 1. Danach umfasst der USB-Token 2 einen nicht-flüchtigen Speicher 23 (NVM), z.B. einen Flash-Speicher oder dergleichen, einen USB-Speichercontroller 22, der den Zugriff eines Endgeräts über die USB-Schnittstelle 21 auf den Speicher 23 mit den Nutzdaten steuert, sowie eine Sicherheitseinheit 24 (SE), welche einerseits mit dem USB-Controller 22 verbunden ist und andererseits über eine elektrische Antennenverbindung 25 mit einer Antenne 31, die in dem Kartenkörper 3 verläuft. Die Antennenverbindung 25 verläuft hierbei von der Sicherheitseinheit 24 über einen Übergangsbereich 26 zwischen dem USB-Token 2 und dem Kartenkörper 3 zu der Antenne 31. Die Antenne 31, die eine kontaktlose Schnittstelle zur Datenkommunikation mit der Sicherheitseinheit 24 repräsentiert, ist hierbei in geeigneter Weise in dem Kartenkörper 3 verlegt, beispielsweise als Spulenantenne entlang einer Randkontur des Kartenkörpers 3.

Der durch das Bezugszeichen 26 angedeutete Übergangsbereich von dem Speicherabschnitt bzw. USB-Token 2 in den Kartenkörper 3 repräsentiert einen Trennbereich, an dem die Antennenverbindung 25 bei Inbetriebnahme der USB-Karte 1 derart getrennt oder abgerissen wird, dass die Sicherheitseinheit 24 anschließend nicht mehr von einem externen Gerät über die Antenne 31 angesprochen werden kann. Neben der Antennenverbindung 25 kann der Übergangsbereich 26 aus Stabilitätsgründen weitere Materialverbindungen umfassen, die den USB-Token 2 im Vorinbetriebnahmezustand mit dem Kartenkörper 3 zusätzlich verbinden und bei der Inbetriebnahme der USB-Karte 1 irreversibel aufgebrochen werden.

In Fig. 2 ist der Übergangsbereich 26 beispielsweise durch die Token-seitigen Antennenkontakte 27 und die Kartenkörper-seitigen Antennenkontakte 33 veranschaulicht, die im Auslieferungs- bzw. Vorinbetriebnahmezustand der USB-Karte 1 fest miteinander verbunden sind und derart in Kontakt stehen, dass eine kontaktlose Datenkommunikation mit der Sicherheitseinheit 24 über die Antenne 31 möglich ist.

Gemäß dem in Fig. 1 skizzierten Verfahren wird die USB-Chipkarte 1 vor dem Ausliefern an den Nutzer aufseiten des Chipkartenherstellers oder des Chipkartenherausgebers in Schritt S1 mit den betreffenden Nutzdaten ausgestattet. Diese werden in dem nicht-flüchtigen Speicher 2 des USB-Tokens 2 abgespeichert ("STORE data in nvm"). Als Absicherung der Nutzdaten werden in Schritt S2 entweder nur diese oder der komplette Speicher 2 mit einem geeigneten kryptographischen Verfahren in der abgesicherten Umgebung des Chipkartenherstellers oder -herausgebers verschlüsselt ("ENC-RYPT nvm"). Dabei kann ein asymmetrisches oder symmetrisches Verschlüsselungsverfahren zum Einsatz kommen, bei dem der geheime Verschlüsselungsschlüssel dem Chipkartenherausgeber bzw. -hersteller vorliegt und der zugeordnete oder identische Entschlüsselungsschlüssel auf der USB-Chipkarte 1 in der Sicherheitseinheit 24 der USB-Karte 1 hinterlegt wird. Bei einem asymmetrischen Verfahren liegt der geheime Verschlüsselungsschlüssel ausschließlich dem Chipkartenherausgeber bzw. -hersteller vor, so dass eine erneute Verschlüsselung einmal entschlüsselter Nutzdaten ohne Mitwirken des Chipkartenherausgebers bzw. -herstellers nicht möglich ist.

Sofern es sich bei den im Speicher 23 hinterlegten Nutzdaten um individuelle Daten handelt, die nur für einen bestimmten Benutzer oder für ein bestimmtes Endgerät bestimmt sind, können der USB-Token 2 bzw. die Nutzdaten im Rahmen der Herstellung in Schritt S3 zusätzlich optisch und/ oder elektronisch personalisiert werden ("PERSONALIZE card"), so dass eine eindeutige Zuordnung der gespeicherten Nutzdaten zu einem Nutzer bzw. Endgerät gegeben ist und geprüft werden kann.

Natürlich können die Schritte des in Fig.1 skizzierten Verfahrens, soweit technisch sinnvoll, auch in abweichender Reihenfolge durchgeführt werden. So ist es beispielsweise ohne weiteres möglich, die Reihenfolge der Schritte S2 und S3 zu vertauschen und die USB-Karte 1 bzw. die im Speicher 23 abgelegten Nutzdaten zu personalisieren und den nicht-flüchtigen Speicher erst anschließend zu verschlüsseln. Derartige technisch sinnvolle Abweichungen von der durch die Fig.1 vorgegebenen Reihenfolge sollen von der vorliegenden Anmeldung natürlich mit umfasst sein, ohne dass in jedem Einzelfall explizit darauf hingewiesen werden muss.

Anschließend wird die derart datentechnisch ausgestattete USB-Chipkarte 1 in Schritt S4 an den betreffenden Nutzer übergeben ("SHIP card to user"), beispielsweise indem sie ihm postalisch zugestellt wird oder er sie an einem bestimmten Ort, beispielsweise in einem Filialgeschäft des Kartenherausgebers oder -herstellers abholt. Hierbei können die bei postalischer Übergabe von anderen chipkartenförmigen Datenträgern, beispielsweise SIM-Mobilfunkkarten, Bank- oder Kreditkarten oder dergleichen, üblichen Sicherheitsvorkehrungen auch hier eingesetzt werden, indem eine geheime Kennung, z.B. eine PIN, auf der Chipkarte oder einem zugeordneten Hintergrundserver hinterlegt und an den Nutzer zur Verwendung bei der Inbetriebnahme der USB-Chipkarte 1 ausgegeben wird. Natürlich sind auch anderweitige Absicherungen möglich, z.B. eine biometrische Identifikation des Nutzers oder dergleichen.

Nach der Entgegennahme der USB-Chipkarte 1 durch den Nutzer kann dieser unter Verwendung der Sicherheitseinheit 24 und der Antenne 31 in Schritt S5 prüfen ("VERIFY initial_operation_status"), ob die erhaltene USB-Chipkarte 1 bereits vorher in Betrieb genommen wurde, d.h. unberechtigt Nutzdaten manipuliert oder Schadcode in den Speicher 23 eingespielt worden sein könnte, oder ob sich die USB-Chipkarte 1 noch immer in dem unbenutzten Auslieferungs- bzw. Vorinbetriebnahmezustand befindet. Sofern der Nutzer feststellt, dass sich die USB-Karte 1 nicht mehr in dem Vorinbetriebnahmezustand befindet, sondern bereits von dritter Seite unberechtigt in Betrieb genommen wurde, kann er die USB-Karte 1 umgehend an den Kartenherausgeber bzw. -hersteller zurücksenden, da in diesem Falle von einer Manipulation der Nutzdaten in dem Speicher 21 oder der USB-Chipkarte 1 selbst auszugehen ist, beispielsweise indem ein Schadcode aufgespielt wurde, der das Endgerät infizieren würde, wenn die USB-Chipkarte 1 über die USB-Schnittstelle 21 mit dem Endgerät verbunden werden würde.

Der Schritt S5 dient also dazu, dass der Nutzer zuverlässig sicherstellen kann, dass die Integrität der Nutzdaten gegeben ist und keine Gefahr von der Verwendung der USB-Chipkarte 1 ausgeht. Dazu wird in Schritt S5a eine kontaktlose Anfrage über die Antenne 31 an die Sicherheitseinheit 24 gestellt ("REQUEST ios_message"), auf die die Sicherheitseinheit 24 in Schritt S5b eine vorgegebene Nachricht über die Antenne 31 ausgibt ("RETURN ios_message"). Diese vorgegebene Nachricht kann beispielsweise den Begriff oder die Information "unbenutzt" oder "unused" transportieren und von dem Nutzer auf einem entsprechenden Lesegerät angezeigt werden, das mit der Sicherheitseinheit 24 in einer kontaktlosen Datenkommunikationsverbindung über die Antenne 31 steht. Diese vorgegebene Nachricht wird jedoch nur dann ausgegeben, wenn ein elektrischer Kontakt von der Antenne 31 über die Antennenverbindung 25 zu der Sicherheitseinheit 24 besteht und die USB-Chipkarte 1 insofern im Vorinbetriebnahmezustand vorliegt.

Anhand der Figuren 2 und 3 ist ersichtlich, dass bei der Inbetriebnahme der USB-Karte 1 die Kontaktierung der Antennenkontakte 27, 33 im Übergangsbereich 26 zwangläufig unterbrochen bzw. getrennt werden muss, wenn der USB-Token 2 aus der Ausnehmung des Kartenkörpers 3 herausgeklappt wird, um die USB-Schnittstelle 21 für eine Verbindung mit einem Endgerät freizulegen.

Bei der Herstellung der USB-Karte 1 wird die Kontaktierung der Antennenkontakte 27, 33 der Antennenverbindung 25 derart ausgestaltet, dass die Antennenkontakte 27, 33, die durch anfängliches Herausklappen des USB-Tokens 2 aus dem Kartenkörper 3 einmal getrennte wurden, nicht dadurch wieder kontaktiert werden können, dass der USB-Token 2 in die Ausnehmung zurückgeklappt wird. Die USB-Karte 1 wird also bereits bei der Herstellung derart ausgestaltet, dass die Antennenverbindung 25 über den Übergangsbereich 26 hinaus vollständig kontaktiert ist und im Übergangsbereich 26 geeignet präpariert ist, damit beim Herausklappen des USB-Tokens 2 aus dem Kartenkörper 3 eine irreversible Trennung der Kontaktflächen 27, 33 der Antennenverbindung 25 erfolgt. Dies kann beispielsweise durch Verwendung einer geeigneten Leitpaste oder geeigneter Klebstoffe in dem Übergangsbereich 26 erreicht werden, die nach einem Abreißen oder einer Trennung nicht mehr kontaktiert werden können. Alternativ kann die Antennenverbindung 25 in dem Übergangsbereich 26 leicht flexibel oder kontrahierbar ausgestaltet werden, so dass sich bei einem Abriss in Folge eines Herausklappens des USB-Tokens keine Möglichkeit der Kontaktierung mehr ergibt.

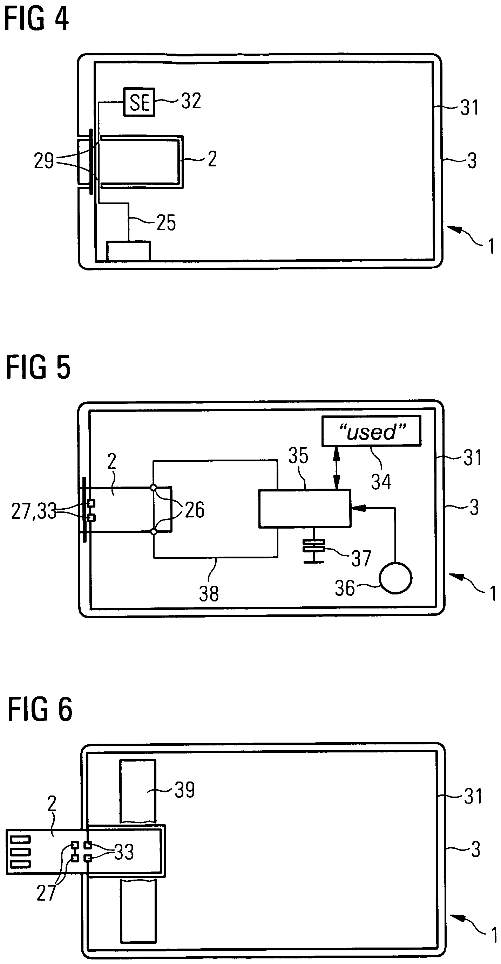

Eine weitere Ausgestaltung der Antennenverbindung 25 im Übergangsbereich 26 ist aus Fig. 4 ersichtlich. Dort wird der Übergangsbereich 26 durch einen Kunststoffsteg gebildet, der sich an ein Scharnierelement (dargestellt als schwarzer Balken) anschließt, über welches der USB-Token 2 aus dem Kartenkörper 3 ausklappbar ist. Der Übergangsbereich 26 bildet hier einen Abrissbereich 29, in dem die Antennenverbindung 25 beim Herausklappen des USB-Tokens 2 irreversibel abreißt. Dies kann beispielsweise erreicht werden, indem die Antennenverbindung 25 aus Draht gefertigt ist, der bei Herausklappen des USB-Tokens 2 abreißt und bei Hereinklappen des USB-Tokens 2 nicht mehr kontaktiert wird, da die Drahtenden durch die mechanische Kraft beim Herausklappen verrutschen oder durch Kunststoffmaterial des Kartenkörpers 3 beiseite gedrückt oder überlagert werden. Ebenso ist es möglich, die Antenne 31 und die Antennenverbindung 25 in Form einer mit leitfähigem Material bedruckten Zwischenfolie im Rahmen eines Laminierprozesses bei der Chipkartenherstellung in einen Kunststoffschichtenstapel so einzubringen, dass beim Aufklappen des USB-Tokens 2 die Antennenzwischenschicht im Abrissbereich 29 irreversibel reißt.

Nachdem der Nutzer in Schritt S5 infolge des Empfangs der vorgegebenen Nachricht ("ios_message") festgestellt hat, dass sich die ihm vorliegende USB-Chipkarte 1 noch in einem Vorinbetriebnahmezustand befindet und damit noch unbenutzt und unmanipuliert ist, wird in Schritt S6 geprüft, ob der Nutzer überhaupt autorisiert ist, die in dem Speicher 23 abgelegten Nutzdaten auf ein Endgerät zu überspielen ("AUTHENTICATE"). Für eine solche Prüfung gibt es vielfältige Möglichkeiten, beispielsweise die Authentisierung des Nutzers gegenüber der Sicherheitseinheit 24 oder einem Hintergrundsystem des Kartenherstellers oder -herausgebers mittels einer PIN, die der Benutzer von dem Kartenhersteller oder -herausgeber zuvor erhalten hat.

Beispielsweise kann der Nutzer eine PIN zusammen mit einem von der Sicherheitseinheit 24 erzeugten Einmalpasswort (OTP) über ein geeignetes Webportal an einen Hintergrundserver des Kartenherausgebers oder Kartenherstellers senden, welcher die Autorisierung des Nutzers prüft. Eine solche Authentifizierung kann auch eine, ggf. wechselseitige Authentifizierung des Nutzers oder der USB-Chipkarte 1 über die Sicherheitsschnittstelle 31 gegenüber dem Endgerät beinhalten, für welches die Nutzdaten in dem Speicher 23 bestimmt sind. Falls sich der Nutzer korrekt authentifizieren kann, schaltet der Hintergrundserver die USB-Chipkarte 1 z.B. über die Antenne 31 frei.

Die erfolgreiche Autorisierung bzw. Authentifizierung wird von der Sicherheitseinheit 24 vermerkt und ist die Voraussetzung dafür, dass der in Schritt S2 herstellerseitig verschlüsselte Speicher 23 in Schritt S7 wieder entschlüsselt wird ("DECRYPT nvm"), vorzugsweise von der Sicherheitseinheit 24 selbst. Der hierfür notwendige Entschlüsselungsschlüssel liegt vorzugsweise in einem geeigneten abgesicherten Bereich der Sicherheitseinheit 24 vor. Wahlweise kann die Sicherheitseinheit 24 den Entschlüsselungsschlüssel auch über eine elektrische Verbindung an den USB-Controller 22 weiterreichen, der dann die Entschlüsselung des Speichers 23 vornimmt. Hierbei wird der Speicher 23 vorzugsweise irreversibel entschlüsselt, so dass ein erneutes Verschlüsseln nicht mehr möglich ist. Die Entschlüsselung in Schritt S7 wird also nur ein einziges Mal durchgeführt und dient als zusätzliche Sicherheitsfunktion für den Fall, dass die an sich irreversible Trennung der Antennenverbindung 25 im Übergangsbereich 26 durch aufwendige Manipulation der in Betrieb genommenen USB-Karte 1 dennoch wiederhergestellt werden kann. Dann würde ein Nutzer bzw. die Sicherheitseinheit 24 nämlich merken, dass ein entschlüsselter Speicher 23 bei einer sich vermeintlich im Vorinbetriebnahmezustand befindlichen USB-Karte 1 nur aufgrund einer Manipulation von Außen möglich ist.

Als weitere Sicherheitsfunktion ist der USB-Controller 22 nach Einspielen der Nutzdaten in den Speicher 23 in Schritt S1 zunächst inaktiv. Der inaktive Zustand des USB-Controllers 22 kann z.B. durch ein entsprechend gesetztes oder nicht gesetztes Flag in/ von der Sicherheitseinheit 24 vorgegeben sein. Ein Zugriff auf den Speicher 23 wird von dem inaktiven USB-Controller 22 nicht bearbeitet, die USB-Karte 1 ist dann unbrauchbar. Nach der erfolgreichen Authentifizierung in Schritt S6 schaltet die Sicherheitseinheit 24 den nicht-flüchtigen Speicher 23 in Schritt S8 für einen Zugriff über die USB-Schnittstelle 21 frei ("UNLOCK nvm"), indem der USB-Controller 22 durch Setzen eines Berechtigungsflags in dem nicht-flüchtigen Speicher 23 oder in der Sicherheitseinheit 24 aktiviert wird. Der USB-Controller 22 verifiziert bei jeder Zugriffsanfrage eines Endgeräts auf den Speicher 23 das Berechtigungsflag und stellt fest, ob aufgrund einer korrekten Authentisierung eine Freigabe seitens der Sicherheitseinheit 24 vorliegt.

Die Entschlüsselung und Freischaltung des Speichers 23 in den Schritten S7 und S8 sind weitere Sicherheitsfunktionen, anhand derer ein Nutzer prüfen kann, ob sich der Datenträger noch in einem Vorinbetriebnahmezustand befindet. Der Datenträger befindet sich dann nicht mehr in einem Vorinbetriebnahmezustand, wenn der Speicher 23 bereits entschlüsselt und/ oder das Berechtigungsflag bereits gesetzt wurde.

Schließlich erfolgt in Schritt S9 die eigentliche Inbetriebnahme der USB-Chipkarte 1 ("INITIALLY_OPERATE card"), indem das USB-Token 2 im Wesentlichen gleichzeitig (symbolisiert durch die geschweifte Klammer in Fig. 1) aus der Ausnehmung des Kartenkörpers 3 herausgeklappt wird (Schritt S9a: "LAY_OPEN interface") und dadurch die Antennenverbindung 25 im Übergangsbereich 26 irreversibel getrennt wird (Schritt S9b: "DIS-CONNECT se").

Als weitere Sicherheitsmaßnahme umfasst die USB-Karte 1 auch einen Kondensator 28, der als Zeitpuffer für die Inbetriebnahme der USB-Karte 1 dient. Der Kondensator 28 wird hierbei über die Antenne 31 derart aufgeladen, dass er die USB-Karte 1 für eine bestimmte, eher kurze Zeitdauer mit einer Betriebsspannung versorgen kann, z.B. für fünf Minuten. Innerhalb dieser Zeitdauer, beginnend z.B. mit der erfolgreichen Authentifizierung in Schritt S6 oder der Inbetriebnahme in Schritt S9, muss eine USB-Verbindung mit dem Endgerät über die USB-Schnittstelle 21 hergestellt und die Nutzdaten müssen über die USB-Verbindung ausgelesen werden. Nach Ablauf der Zeitdauer wird die USB-Karte 1 funktionsuntauglich und wertlos. Als weitere Sicherheitsmaßnahme können die Nutzdaten in dem Speicher 23 kurz nach Ablauf der Zeitdauer durch den USB-Controller 22 gelöscht werden.

Nach dem Schritt S9 ist der nicht-flüchtige Speicher 23 vollständig zugänglich, da einerseits die USB-Schnittstelle 21 freigelegt (Schritt S9a) und durch ein Endgerät kontaktierbar ist, und andererseits der Speicher 23 entschlüsselt ist (Schritt S7) sowie das Berechtigungsflag für den USB-Controller 22 gesetzt ist (Schritt S8). Entsprechend führt der Schritt S10 des erneuten Prüfens auf einen Vorinbetriebnahmezustand der USB-Karte 1 dazu, dass eine kontaktlose Anfrage über die Antenne 31 (Schritt S10a: "REQUEST ios_message") aufgrund der Trennung der Antennenverbindung 25 im Übergangsbereich 26 nicht mehr an die Sicherheitseinheit 24 weitergeleitet werden kann und die vorgegebene Nachricht nicht mehr ausgegeben wird ("no ios_message"). Dem Nutzer wird dadurch angezeigt, dass die USB-Karte 1 bereits benutzt wurde bzw. potentiell hätte benutzt und manipuliert werden können. Da nun keine Möglichkeit einer Datenkommunikationsverbindung von außen zu der Sicherheitseinheit 24 mehr besteht, kann in diesem Zustand auch nicht der Verschlüsselungsstatus des Speichers 23 oder das Berechtigungsflag für den USB-Controller 22 geprüft werden. Diese Sicherheitsmechanismen werden erst später bei dem eigentlichen Zugriff eines Endgeräts über den USB-Controller 22 auf den Speicher 23 geprüft.

Fig. 5 zeigt eine Ausgestaltung der vorliegenden Erfindung, bei der in dem Kartenkörper 3 eine Anzeigeneinrichtung 34, beispielsweise ein LCD-Display integriert ist, welches über einen Displaycontroller 35 gesteuert und von einer Batterie 37 mit Betriebsspannung versorgt wird. Eine mit dem Displaycontroller 35 verbundene Sensorleitung 38 verläuft über einen Übergangsbereich 26 zwischen dem USB-Token 2 und dem Kartenkörper 3 hinweg, so dass die Sensorleitung 38 ebenso irreversibel wie die Antennenverbindung 25 getrennt wird, sobald die USB-Karte 1 durch Herausklappen des USB-Tokens 2 in Betrieb genommen wird.

In Schritt S9 wurde die USB-Karte 1 in Betrieb genommen und dadurch gleichzeitig die Sensorleitung 38 gekappt, so dass der Displaycontroller 35 das LCD-Display 34 in Schritt S10b derart ansteuert, dass ein vorgegebener optischer Hinweis angezeigt wird ("DISPLAY used_message"), beispielsweise "benutzt", "in Betrieb genommen" oder "used", um dem Benutzer die erfolgte Inbetriebnahme anzuzeigen. Die Anzeige des vorgegebenen Hinweises ist irreversibel, so dass es für den Nutzer zuverlässig von Außen sichtbar ist, dass die USB-Karte 1 bereits in Betrieb genommen wurde.

In Schritt S11 wird die in Betrieb genommene USB-Karte 1 schließlich über die USB-Schnittstelle 21 mit einem Endgerät verbunden ("CONNECT card") und die Nutzdaten werden in Schritt S12 von dem Endgerät aus dem Speicher 23 ausgelesen ("READ data") und in der vorgesehenen Weise verwendet, z.B. als Update der Firmware installiert.

In den Kartenkörper 3 kann weiterhin eine Betätigungseinrichtung 36 integriert sein, beispielsweise ein Knopf, Schalter oder dergleichen, der mit der Sicherheitseinheit 24 bzw. dem Displaycontroller 35 in Verbindung steht und vom Nutzer betätigt werden kann, um von der Sicherheitseinheit 24 ein Einmalpasswort oder eine sonstige geheime Kennung zur Authentifizierung im Rahmen des Schrittes S6 anzufordern. Das Einmalpasswort wird von der Sicherheitseinheit 24 nach einem vorgegebenen Algorithmus bereitgestellt, der z.B. auch einem Hintergrundserver bekannt ist, so dass das erzeugte und von dem Nutzer eingegebene Einmalpasswort verifiziert werden kann. Die das Einmalpasswort erzeugende Sicherheitseinheit 24 ist in dem USB-Token 2 angeordnet, so dass sichergestellt ist, dass nach Inbetriebnahme der USB-Karte 1 in Schritt S9 kein Einmalpasswort mehr angefordert werden kann. Dann ist nämlich die Antennenverbindung 25 ebenso getrennt, wie die Sensorleitung 38.

Fig. 4 zeigt eine Ausgestaltung einer USB-Karte 1, bei der eine Sicherheitseinheit 32 nicht in dem USB-Token 2 sondern in dem Kartenkörper 3 angeordnet ist, beispielsweise als abgesichertes Chipkartenmodul oder dergleichen. Damit die Inbetriebnahme der USB-Chipkarte 1 durch Herausklappen des USB-Tokens 2 auch zu der gewünschten Trennung der Antennenverbindung 25 im Übergangsbereich 26 führt, wird die Antennenverbindung 25 in diesem Fall von der Sicherheitseinheit 32 über einen als Trennbereich 29 ausgestalteten Übergangsbereich 26 in das USB-Token 2 und von dort über einen weiteren als Trennbereich 29 ausgestalteten Übergangsbereich 26 wieder in den Kartenkörper zur Kontaktierung der Antenne 31 geführt.

Fig. 6 zeigt eine weitere Ausgestaltung einer USB-Karte 1, bei der zusätzlich zu den oben geschilderten Sicherungsmaßnahmen noch ein optisches, möglichst nicht von dem Kartenkörper 3 entfernbares Siegel 39 im Vorinbetriebnahmezustand derart quer über den USB-Token 2 angebracht ist, dass es beim erstmaligen Herausklappen des USB-Tokens 2 aus dem Kartenkörper 3 deutlich sichtbar reißt. Neben dem optischen Benutzungshinweis auf dem LCD-Display 34 gemäß Fig. 5 ist dies also eine weitere Möglichkeit für einen Nutzer, die erfolgte Inbetriebnahme der USB-Karte 1 ohne weitere Hilfsmittel sofort zu erkennen. Diese sichtbaren, optischen Inbetriebnahme-Siegel komplettieren die oben erläuterten technischen Inbetriebnahme-Siegel, wie die Entschlüsselung des Speichers 23 (Schritt S7), die Aktivierung des USB-Controllers 22 (Schritt S8) und insbesondere die Trennung der Antennenverbindung 25 (Schritt S9b).

## Patentansprüche

1. Verfahren zur Prüfung einer erfolgten Inbetriebnahme eines portablen Datenträgers (1), der einen nicht-flüchtigen Speicher (23), einen Speichercontroller (22), eine Speicherschnittstelle (21), über die ein Endgerät auf den Speicher (23) zugreifen kann, und eine zweite Schnittstelle (31) aufweist, **dadurch gekennzeichnet,**
**dass** eine erfolgte Inbetriebnahme (S9) des Datenträgers (1) durch eine Anfrage (S5a, S10a) an eine Sicherheitseinheit (24) des Datenträgers (1) über die mit der Sicherheitseinheit (24) verbundene zweite Schnittstelle (31), Sicherheitsschnittstelle, des Datenträgers (1) geprüft wird (S5b, S10b),
**dass** der Datenträger (1) in Betrieb genommen wird (S9), indem die Speicherschnittstelle (21), die vor der Inbetriebnahme (S9) derart in dem Datenträger (1) angeordnet ist, dass sie nicht mit einem Endgerät verbunden werden kann, derart freigelegt wird (S9a), dass sie mit einem Endgerät verbunden werden kann (S11), und
**dass** eine elektrische Verbindung (25) zwischen der Sicherheitseinheit (24) und der Sicherheitsschnittstelle (31) im Wesentlichen gleichzeitig mit dem Freilegen (S9a) der Speicherschnittstelle (21) dauerhaft getrennt wird (S9b),
wobei die Speicherschnittstelle (24) freigelegt wird (S9a), indem ein zumindest die Speicherschnittstelle (21) umfassender Speicherabschnitt (2) des Datenträgers (1) aus einem zumindest die Sicherheitsschnittsstelle (31) umfassenden Körperabschnitt (3) des Datenträgers (1) herausgeklappt wird (S9a).

2. Verfahren nach Anspruch 1, **dadurch gekennzeichnet, dass** eine erfolgte Inbetriebnahme (S9) des Datenträgers (1) durch eine Anfrage (S5a, S10a) über die als Kontaktlos-Schnittstelle ausgestaltete Sicherheitsschnittstelle (31) geprüft wird (S5b, S10b), ohne dass der Datenträger (1) über die als Kontakt-Schnittstelle ausgestaltete Speicherschnittstelle (21) mit einem Endgerät verbunden ist.

3. Verfahren nach einem der Ansprüche 1 bis 2, **dadurch gekennzeichnet, dass** vor der Inbetriebnahme (S9) Aktualisierungsdaten für ein Endgerät in dem Speicher (23) des Datenträgers (1) gespeichert werden (S1), der Datenträger (1) in Betrieb genommen (S9) und über die Speicherschnittstelle (21) mit dem Endgerät verbunden wird (S11) und das Endgerät über die Speicherschnittstelle (21) auf die Aktualisierungsdaten zugreift (S12).

4. Verfahren nach einem der Ansprüche 1 bis 3, **dadurch gekennzeichnet, dass** der Speichercontroller (22) einen Zugriff eines Endgeräts über die Speicherschnittstelle (21) auf den Speicher (23) freigibt (S8), wenn die Sicherheitseinheit (24) eine Zugriffsberechtigung über die Sicherheitsschnittstelle (31) festgestellt hat (S6).

5. Verfahren nach einem der Ansprüche 1 bis 4, **dadurch gekennzeichnet, dass** ein verschlüsselter Speicherinhalt des Speichers (23) entschlüsselt wird (S7), wenn die Sicherheitseinheit (24) über die Sicherheitsschnittstelle (31) eine Zugriffsberechtigung festgestellt hat (S6).

6. Verfahren nach einem der Ansprüche 1 bis 5, **dadurch gekennzeichnet, dass** die erfolgte Inbetriebnahme (S9) des Datenträgers (1) auf Anfrage oder dauerhaft auf einer Anzeigeeinrichtung (34) des Datenträgers (1) angezeigt wird (S10b).

7. Verfahren nach Anspruch 4 oder 5 und Anspruch 6, **dadurch gekennzeichnet, dass** die Zugriffsberechtigung anhand eines auf Anfrage auf der Anzeigeeinrichtung (34) angezeigten Einmalpassworts festgestellt wird (S6).

8. Verfahren nach einem der Ansprüche 1 bis 7, **dadurch gekennzeichnet, dass** eine Zeitpuffereinrichtung (28) einen Zugriff eines Endgeräts über die Speicherschnittstelle (21) auf den Speicher (23) nur für eine vorgegebene Zeitdauer freigibt.

9. Verfahren nach einem der Ansprüche 1 bis 8, **dadurch gekennzeichnet, dass** im Wesentlichen gleichzeitig mit der Inbetriebnahme (S9) des Datenträgers (1) ein optisches Siegel (39) des Datenträgers (1) sichtbar beschädigt wird.

10. Portabler Datenträger (1), umfassend einen nicht-flüchtigen Speicher (23), einen Speichercontroller (22) und eine Speicherschnittstelle (21), über die ein Endgerät auf den Speicher (23) zugreifen kann, und eine zweite Schnittstelle, **gekennzeichnet durch** eine Sicherheitseinheit (24), welche mit der zweiten Schnittstelle, Sicherheitsschnittstelle (31), elektrisch verbunden ist, wobei die Sicherheitseinheit (24) und die Sicherheitsschnittstelle (31) derart eingerichtet sind, dass eine erfolgte Inbetriebnahme des Datenträgers (1) durch eine Anfrage an die Sicherheitseinheit (24) über die Sicherheitsschnittstelle (31) geprüft werden kann, und
die Speicherschnittstelle (21) für eine Verbindung mit einem Endgerät freigelegt werden kann (S9a), wobei die elektrische Verbindung (25) zwischen der Sicherheitseinheit (24) und der Sicherheitsschnittstelle (31) so ausgebildet ist, dass sie im Wesentlichen gleichzeitig mit dem Freilegen (S9a) der Speicherschnittstelle (21) derart dauerhaft getrennt wird (S9b), dass ein erneutes elektrisches Verbinden nicht möglich ist,
wobei der Datenträger (1) einen zumindest die Speicherschnittstelle (21) umfassenden Speicherabschnitt (2) und einen zumindest die Sicherheitsschnittsstelle (31) umfassenden Körperabschnitt (3) umfasst, wobei der Speicherabschnitt (2) und der Körperabschnitt (3) derart miteinander verbunden sind, dass der Speicherabschnitt (2) aus dem Körperabschnitt (3) herausklappbar ist, so dass im Wesentlichen gleichzeitig die Speicherschnittstelle (21) für eine Verbindung mit einem Endgerät freigelegt und die elektrische Verbindung (25) zwischen der Sicherheitseinheit (24) und der Sicherheitsschnittstelle (31) irreversibel getrennt wird.

11. Verfahren zum Herstellen eines portablen Datenträgers (1) nach Anspruch 10, **dadurch gekennzeichnet, dass** der Datenträger (1) aus einem zumindest die Sicherheitsschnittstelle (31) umfassenden Körperabschnitt (3) und einem zumindest die Speicherschnittstelle (21) umfassenden Speicherabschnitt (2) derart gebildet wird, dass die Speicherschnittstelle (21) für eine Verbindung mit einem Endgerät freigelegt werden kann (S9a), und die elektrische Verbindung (25) zwischen der Sicherheitseinheit (24) und der Sicherheitsschnittstelle (31) gebildet wird, die im Wesentlichen gleichzeitig mit dem Freilegen (S9a) der Speicherschnittstelle (21) derart dauerhaft getrennt wird (S9b), dass ein erneutes elektrisches Verbinden nicht möglich ist,
wobei die Speicherschnittstelle (24) freigelegt werden kann (S9a), indem der zumindest die Speicherschnittstelle (21) umfassender Speicherabschnitt (2) des Datenträgers (1) aus dem zumindest die Sicherheitsschnittsstelle (31) umfassenden Körperabschnitt (3) des Datenträgers (1) herausgeklappt wird (S9a).

## Claims

1. A method for checking an effected initial operation of a portable data carrier (1) having a non-volatile memory (23), a memory controller (22), a memory interface (21) via which an end device can access the memory (23), and a second interface (31), **characterized in that**
an effected initial operation (S9) of the data carrier (1) is checked (S5b, S10b) through a request (S5a, S10a) to a security unit (24) of the data carrier (1) via the second interface (31), security interface, of the data carrier (1), which interface is connected to the security unit (24), that the data carrier (1) is initially operated (S9) by the memory interface (21), which is arranged in the data carrier (1) before the initial operation (S9) such that it cannot be connected to an end device, being laid open (S9a) such that it can be connected (S11) to an end device, and
an electrical connection (25) between the security unit (24) and the security interface (31) is permanently disconnected (S9b) substantially simultaneously with the laying open (S9a) of the memory interface (21), wherein the memory interface (24) is laid open (S9a) by a memory portion (2) of the data carrier (1) comprising at least the memory interface (21) being folded out (S9a) of a body portion (3) of the data carrier (1) comprising at least the security interface (31).

2. The method according to claim 1, **characterized in that** an effected initial operation (S9) of the data carrier (1) is checked (S5b, S10b) through a request (S5a, S10a) via the security interface (31) configured as a contactless interface, without the data carrier (1) being connected to an end device via the memory interface (21) configured as a contact interface.

3. The method according to any of claims 1 to 2, **characterized in that** before the initial operation (S9), updating data for an end device are stored (S1) in the memory (23) of the data carrier (1), the data carrier (1) is initially operated (S9) and connected (S11) to the end device via the memory interface (21), and the end device accesses (S12) the updating data via the memory interface (21).

4. The method according to any of claims 1 to 3, **characterized in that** the memory controller (22) releases (S8) an access of an end device to the memory (23) via the memory interface (21) when the security unit (24) has ascertained (S6) an access entitlement via the security interface (31).

5. The method according to any of claims 1 to 4, **characterized in that** an encrypted memory content of the memory (23) is decrypted (S7) when the security unit (24) has ascertained (S6) an access entitlement via the security interface (31).

6. The method according to any of claims 1 to 5, **characterized in that** the effected initial operation (S9) of the data carrier (1) is displayed (S10b) on a display device (34) of the data carrier (1) on request or permanently.

7. The method according to claim 4 or 5 and claim 6, **characterized in that** the access entitlement is ascertained (S6) on the basis of a one-time password displayed on the display device (34) on request.

8. The method according to any of claims 1 to 7, **characterized in that** a time buffer device (28) releases an access of an end device to the memory (23) via the memory interface (21) only for a specified time duration.

9. The method according to any of claims 1 to 8, **characterized in that** an optical seal (39) of the data carrier (1) is visibly damaged substantially simultaneously with the initial operation (S9) of the data carrier (1).

10. A portable data carrier (1), comprising a non-volatile memory (23), a memory controller (22) and a memory interface (21) via which an end device can access the memory (23), and a second interface, **characterized by** a security unit (24) electrically connected to the second interface, security interface (31), wherein the security unit (24) and the security interface (31) are configured such that an effected initial operation of the data carrier (1) can be checked through a request to the security unit (24) via the security interface (31), and
the memory interface (21) can be laid open (S9a) for a connection to an end device, wherein the electrical connection (25) between the security unit (24) and the security interface (31) is formed such that it is permanently disconnected (S9b) substantially simultaneously with the laying open (S9a) of the memory interface (21), such that an electrical re-connecting is not possible,
wherein the data carrier (1) comprises a memory portion (2) comprising at least the memory interface (21) and a body portion (3) comprising at least the security interface (31), wherein the memory portion (2) and the body portion (3) are interconnected such that the memory portion (2) can be folded out of the body portion (3), so that substantially simultaneously the memory interface (21) is laid open for a connection to an end device and the electrical connection (25) between the security unit (24) and the security interface (31) is disconnected irreversibly.

11. A method for manufacturing a portable data carrier (1) according to claim 10, **characterized in that** the data carrier (1) is formed from a body portion (3) comprising at least the security interface (31) and a memory portion (2) comprising at least the memory interface (21), such that the memory interface (21) can be laid open (S9a) for a connection to an end device, and the electrical connection (25) between the security unit (24) and the security interface (31) is formed which is permanently disconnected (S9b) substantially simultaneously with the laying open (S9a) of the memory interface (21), such that an electrical re-connecting is not possible,
wherein the memory interface (24) can be laid open (S9a) by a memory portion (2) of the data carrier (1) comprising at least the memory interface (21) being folded out (S9a) of a body portion (3) of the data carrier (1) comprising at least the security interface (31).

## Revendications

1. Procédé de vérification d'une mise en service aboutie d'un support de données portable (1) qui comporte une mémoire non volatile (23), un contrôleur mémoire (22), une interface mémoire (21) par l'intermédiaire de laquelle un terminal peut accéder à la mémoire (23), et une deuxième interface (31),
**caractérisé en ce**
**qu'**une mise en service (S9) aboutie du support de données (1) est vérifiée (S5b, S10b) par une demande (S5a, S10a) à une unité de sécurité (24) du support de données (1) par l'intermédiaire de la deuxième interface (31), interface de sécurité, du support de données (1), connectée à l'unité de sécurité (24),
**que** le support de données (1) est mis en service (S9), ce qui a lieu en ce que l'interface mémoire (21), agencée de telle façon dans le support de données (1) avant la mise en service (S9) qu'elle ne peut pas être connectée à un terminal, est mise à nu (S9a) de telle façon qu'elle peut être connectée (S11) à un terminal, et
**qu'**une connexion électrique (25) entre l'unité de sécurité (24) et l'interface de sécurité (31) est coupée (S9b) durablement essentiellement simultanément à la mise à nu (S9a) de l'interface mémoire (21),
cependant que l'interface mémoire (24) est mise à nu (S9a), ce qui a lieu en ce qu'une section de mémoire (2) du support de données (1) comprenant au moins l'interface mémoire (21) est rabattue (S9a) hors d'une section de corps (3) du support de données (1) comprenant au moins l'interface de sécurité (31).

2. Procédé selon la revendication 1, **caractérisé en ce qu'**une mise en service (S9) aboutie du support de données (1) est vérifiée (S5b, S10b) par une demande (S5a, S10a) par l'intermédiaire de l'interface de sécurité (31) réalisée en tant qu'interface sans contact, sans que le support de données (1) ne soit connecté à un terminal par l'intermédiaire de l'interface mémoire (21) réalisée en tant qu'interface sans contact.

3. Procédé selon une des revendications de 1 à 2, **caractérisé en ce que**, avant la mise en service (S9), des données d'actualisation pour un terminal sont mémorisées (S1) dans la mémoire (23) du support de données (1), le support de données (1) est mis en service (S9) et est connecté (S11) au terminal par l'intermédiaire de l'interface mémoire (21), et le terminal accède (S12), par l'intermédiaire de l'interface mémoire (21), aux données d'actualisation.

4. Procédé selon une des revendications de 1 à 3, **caractérisé en ce que** le contrôleur mémoire (22) débloque (S8) un accès d'un terminal, par l'intermédiaire de l'interface mémoire (21), à la mémoire (23), quand l'unité de sécurité (24) a constaté (S6) une autorisation d'accès par l'intermédiaire de l'interface de sécurité (31).

5. Procédé selon une des revendications de 1 à 4, **caractérisé en ce qu**'un contenu de mémoire crypté de la mémoire (23) est décrypté (S7) quand l'unité de sécurité (24) a constaté (S6) par l'intermédiaire de l'interface de sécurité (31) une autorisation d'accès.

6. Procédé selon une des revendications de 1 à 5, **caractérisé en ce que** la mise en service (S9) aboutie du support de données (1) est affichée (S10b) sur demande ou durablement sur un dispositif d'affichage (34) du support de données (1).

7. Procédé selon la revendication 4 ou 5 ou selon la revendication 6, **caractérisé en ce que** l'autorisation d'accès est constatée (S6) au moyen d'un mot de passe à usage unique affiché sur demande sur le dispositif d'affichage (34).

8. Procédé selon une des revendications de 1 à 7, **caractérisé en ce qu**'un dispositif de tampon de temps (28) ne débloque que pour une durée de temps prédéterminée un accès d'un terminal, par l'intermédiaire de l'interface mémoire (21), à la mémoire (23).

9. Procédé selon une des revendications de 1 à 8, **caractérisé en ce que,** essentiellement simultanément à la mise en service (S9) du support de données (1), un sceau optique (39) du support de données (1) est visiblement endommagé.

10. Support de données portable (1) comprenant une mémoire non volatile (23), un contrôleur mémoire (22) et une interface mémoire (21) par l'intermédiaire de laquelle un terminal peut accéder à la mémoire (23), et une deuxième interface,
**caractérisé par** une unité de sécurité (24) qui est connectée électriquement à la deuxième interface, interface de sécurité (31), cependant que l'unité de sécurité (24) et l'interface de sécurité (31) sont conçues de telle façon qu'une mise en service aboutie du support de données (1) peut être vérifiée par une demande à l'unité de sécurité (24) par l'intermédiaire de l'interface de sécurité (31), et
en ce que l'interface mémoire (21) peut être mise à nu (S9a) pour une connexion avec un terminal, cependant que la connexion électrique (25) entre l'unité de sécurité (24) et l'interface de sécurité (31) est réalisée de telle façon que, essentiellement simultanément à la mise à nu (S9a) de l'interface mémoire (21), elle est telle manière durablement coupée (S9b) qu'une nouvelle connexion électrique n'est pas possible,
cependant que le support de données (1) comporte au moins une section de mémoire (2) comprenant au moins l'interface mémoire (21) et une section de corps (3) comprenant au moins l'interface de sécurité (31), cependant que la section de mémoire (2) et la section de corps (3) sont connectées de telle manière l'une à l'autre que la section de mémoire (2) peut être rabattue hors de la section de corps (3) de manière à ce que, essentiellement simultanément, l'interface mémoire (21) est mise à nu pour une connexion avec un terminal et la connexion électrique (25) entre l'unité de sécurité (24) et l'interface de sécurité (31) est irréversiblement coupée.

11. Procédé de fabrication d'un support de données (1) portable selon la revendication 10, **caractérisé en ce que** le support de données (1) est constitué de telle façon par une section de corps (3) comprenant au moins l'interface de sécurité (31) et par une section de mémoire (2) comprenant au moins l'interface mémoire (21) que l'interface mémoire (21) peut être mise à nu (S9a) pour une connexion avec un terminal, et que la connexion électrique (25) est constituée entre l'unité de sécurité (24) et l'interface de sécurité (31), laquelle, essentiellement simultanément à la mise à nu (S9a) de l'interface mémoire (21), est coupée (S9b) de telle façon durablement qu'une nouvelle connexion électrique n'est pas possible,
cependant que l'interface mémoire (24) peut être mise à nu (S9a), ce qui a lieu **en ce que** la au moins une section de mémoire (2) du support de données (1) comprenant au moins l'interface mémoire (21) est rabattue (S9a) hors de la section de corps (3) du support de données (1) comprenant au moins l'interface de sécurité (31).
